# EUROPEAN PATENT APPLICATION

(11) **EP 2 600 494 A2**
(43) Date of publication of application: **05.06.2013**
(21) Application number: 12176659.6
(22) Date of filing: 17.07.2012
(51) Int. Cl.: H02K 1/14

(54) **Stator core**

(30) Priority: 29.11.2011 KR 20110125995
(71) Applicant: LG Innotek Co., Ltd., Seoul 100-714 (KR)
(72) Inventor: Hwang, Yohan, 100-714 Seoul (KR)
(74) Representative: Novagraaf Technologies

(57) **Abstract**

Disclosed is a stator core, the stator core including a first split core module having a first height (h1), and a second split core module forming an arc by an inner circumferential surface and an outer circumferential surface forming a second yoke relative to a center of the stator core, having a second tooth protrusively formed from the inner circumferential surface toward the center and wound by a coil, and having a second height (h2), wherein the first height (h1) is higher than the second height (h2), a space between the teeth is formed with a first gap (t1) when a cylindrical shape is formed by coupling of a plurality of first split core modules, and a space between the teeth is formed with a second gap (t2) when a cylindrical shape is formed by coupling of a plurality of second split core modules.

## Description

### CROSS-REFERENCE TO RELATED APPLICATION

The present application is based on, and claims priority from the Korean Application Number 10-2011-0125995, filed on November 29, 2011, the disclosure of which is incorporated by reference herein in its entirety.

### BACKGROUND OF THE DISCLOSURE

### 1. Field of the Disclosure

The present disclosure relates to a motor stator, and more particularly to a stator core formed by coupling of fan-shaped split cores.

### 2. Discussion of the Related Art

This section provides background information related to the present disclosure which is not necessarily prior art.

Generally, almost every vehicle employs an electric power-assist steering system. Such an electric power-assist steering system generates an assist force based on the steering torque and the steering angle, so as to enhance the steering performance of the vehicle.

That is, a steering system that assists a steering force of a vehicle with a separate power is used to enhance the motion stability of a vehicle.

Conventionally, the auxiliary steering device uses hydraulic pressure, but an Electronic Power Steering (EPS) system, adapted to transmit a rotation output of an electric motor to a steering shaft via a speed reduction mechanism, has been increasingly employed these days from a viewpoint of a reduction in engine load, a reduction in weight, an enhanced steering stability and a quick restoring force.

The EPS system is such that an Electronic Control Unit (ECU) drives a motor in response to steering conditions detected by a speed sensor, a torque angle sensor and a torque sensor to enhance a steering stability and provide a quick restoring force, whereby a driver can safely steer a vehicle.

The EPS system is also such that a motor assists a torque manipulating a steering wheel to allow a driver to steer a vehicle with less power, where the motor employs a Brushless Direct Current (BLDC) motor.

The BLDC motor is a DC motor mounted with an electronic rectifying mechanism except for mechanical contacts including a brush and a commutator. The BLDC motor generally includes a stator and a rotor. The BLDC motor has been increasingly used because it is excellent in maintenance property and capable of generating a high torque in addition to miniaturized size.

Furthermore, the BLDC motor is generally formed by an exterior look by coupling of a housing and a cover member, an inner circumferential surface of the housing is provided with a stator, and the stator is centrally formed with a rotor rotatably mounted in electrical interaction with the stator. The rotor is rotatably supported by a rotation shaft, and an upper surface of the rotation shaft is connected by a steering shaft of a vehicle to provide a power assisting the steering of the vehicle as mentioned above. The stator includes a core and a coil, and generally employs a plurality of split (divided) cores these days that are connected in a circular shape.

Meanwhile, a steering feel is one of the most important factors in a vehicular EPS motor, and in order to improve the steering feel, there is a need of regulating a cogging torque. That is, there is generated a twisted concentricity among the divided cores after the coupling is completed, where errors are aggravated to increase a cogging torque, thereby increasing noise and vibration.

The cogging torque cannot be completely removed due to structural configuration in a BLDC motor or a BLAC (Brushless Alternating Current) motor. However, methods are recently being waged to minimize the cogging torque by improving a shape of a stator core.

It is, therefore, desirable to overcome the above problems and others by providing an improved stator core.

### SUMMARY OF THE DISCLOSURE

This section provides a general summary of the disclosure, and is not a comprehensive disclosure of its full scope or all of its features.

The present disclosure is directed to cope with the abovementioned problems/disadvantages and it is an object of the present disclosure to provide a stator core configured to improve a structure, thereby minimizing a cogging torque in an EPS motor.

Technical problems to be solved by the present disclosure are not restricted to the above-mentioned description, and any other technical problems not mentioned so far will be clearly appreciated from the following description by the skilled in the art.

In a general aspect of the present disclosure, there is provided a stator core, comprising: a first split core module provided in a "T" shape for a cross-section perpendicular to a central axis of the stator core, forming an arc by an inner circumferential surface and an outer circumferential surface forming a first yoke relative to a center of the stator core, having a first tooth protrusively formed from the inner circumferential surface toward the center and wound by a coil, and having a first height (h1); and a second split core module interposed between the split core modules stacked toward a central axis of the stator core, provided in a "T" shape for a cross-section perpendicular to a central axis of the stator core, forming an arc by an inner circumferential surface and an outer circumferential surface forming a second yoke relative to a center of the stator core, having a second tooth protrusively formed from the inner circumferential surface toward the center and wound by a coil, and having a second height (h2), wherein the first height (h1) is higher than the second height (h2), a space between the teeth is formed with a first gap (t1) when a cylindrical shape is formed by coupling of a plurality of first split core modules, and a space between the teeth is formed with a second gap (t2) when a cylindrical shape is formed by coupling of a plurality of second split core modules.

Preferably, but not necessarily, the first split core module is formed by stacking a plurality of first split core plates.

Preferably, but not necessarily, the first split core module is formed by stacking a total of 14 sheets of first split core plates.

Preferably, but not necessarily, the second split core module is formed by one sheet of second split core plate.

Preferably, but not necessarily, each height of the first and second split core plates is identical.

Preferably, but not necessarily, the second gap (t2) is less than 0.1mm.

Preferably, but not necessarily, the second gap (t2) becomes zero to allow the second teeth to contact each other.

Preferably, but not necessarily, each of the first and second teeth has a same thickness at a coil winding portion.

Preferably, but not necessarily, the first height (h1) corresponds to a height of at least one or more rotor core modules forming a rotor core rotatably mounted at an inner surface of the stator core.

Preferably, but not necessarily, the second split core module is arranged at a position corresponding to a border of the plurality of rotor core modules forming a skew formed by the plurality of rotor core modules twisted at a predetermined angle.

The stator core according to the present disclosure has an advantageous effect in that a shape of the stator core is improved to minimize a cogging torque of an EPS motor, whereby a steering feel for a driver can be enhanced.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present disclosure will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### BRIEF DESCRIPTION OF THE DRAWINGS

The accompanying drawings, which are included to provide a further understanding of the present disclosure and are incorporated in the present disclosure and constitute a part of this application, and together with the description, serve to explain the principle of the disclosure. In the drawings:
FIG. 1 is a schematic perspective view of a stator core according to an exemplary embodiment of the present disclosure;
FIG. 2 is an enlarged perspective view of first and second teeth of FIG. 1, according to an exemplary embodiment of the present disclosure;
FIG. 3 is a cross-sectional view taken along A-A of FIG.2; and
FIG. 4 is a cross-sectional view taken along B-B of FIG.2.

### DETAILED DESCRIPTION

Advantages and features of the present invention may be understood more readily by reference to the following detailed description of exemplary embodiments and the accompanying drawings. Detailed descriptions of well-known functions, configurations or constructions are omitted for brevity and clarity so as not to obscure the description of the present disclosure with unnecessary detail. Thus, the present disclosure is not limited to the exemplary embodiments which will be described below, but may be implemented in other forms. In the drawings, the width, length, thickness, etc. of components may be exaggerated or reduced for the sake of convenience. Furthermore, throughout the descriptions, the same reference numerals will be assigned to the same elements in the explanations of the figures, and explanations that duplicate one another will be omitted. Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification. The terms "a" and "an" herein do not denote a limitation of quantity, but rather denote the presence of at least one of the referenced item.

Accordingly, the meaning of specific terms or words used in the specification and claims should not be limited to the literal or commonly employed sense, but should be construed or may be different in accordance with the intention of a user or an operator and customary usages. Therefore, the definition of the specific terms or words should be based on the contents across the specification.

As may be used herein, the terms "substantially" and "approximately" provide an industry-accepted tolerance for its corresponding term and/or relativity between items. Such an industry-accepted tolerance ranges from less than one percent to ten percent and corresponds to, but is not limited to, component values, angles, et cetera.

Now, a stator core according to the exemplary embodiments of the present disclosure will be described in detail with reference to the accompanying drawings.

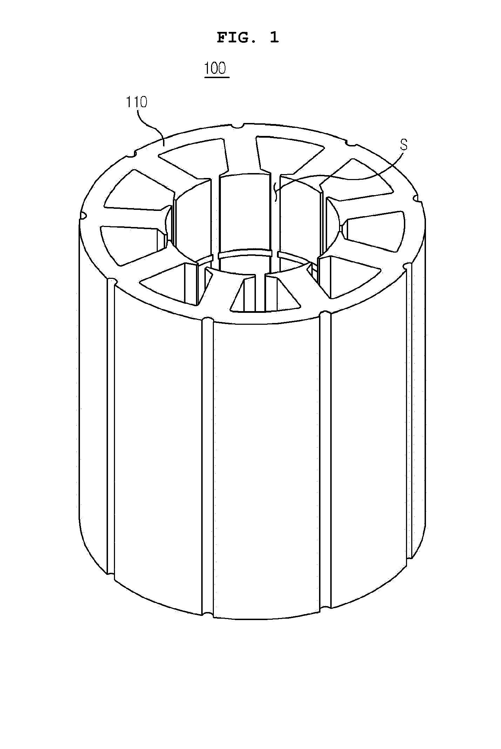

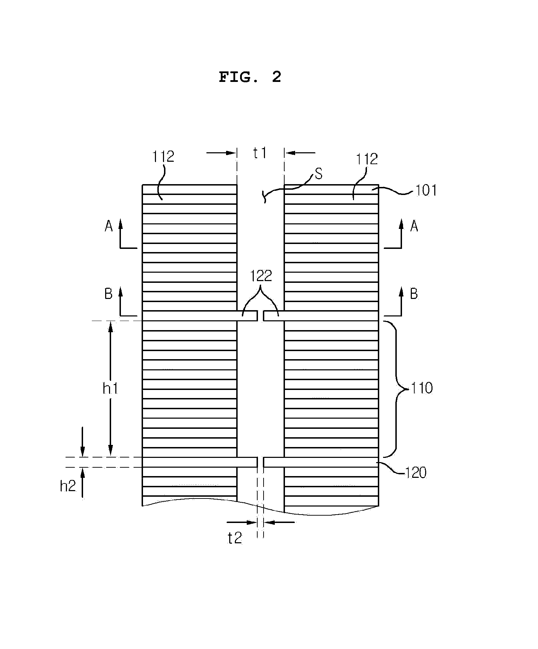

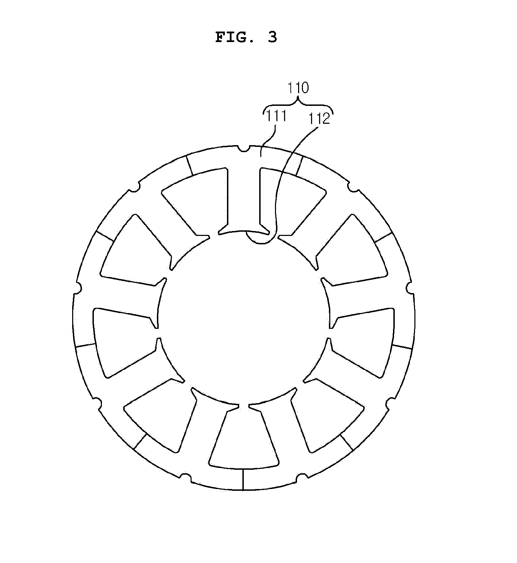

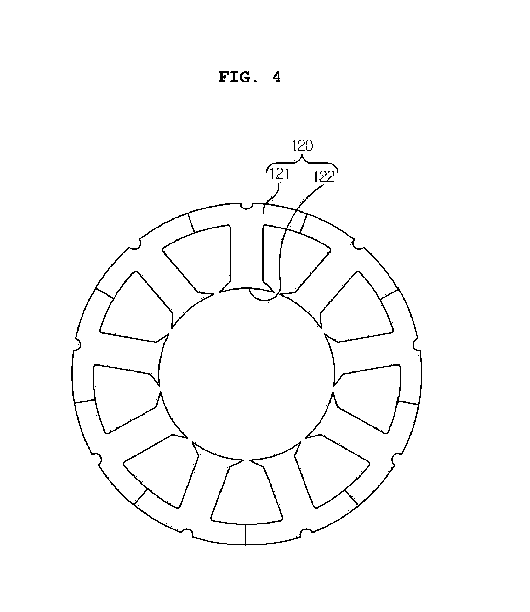

FIG.1 is a schematic perspective view of a stator core according to an exemplary embodiment of the present disclosure, FIG.2 is an enlarged perspective view of first and second teeth of FIG. 1, according to an exemplary embodiment of the present disclosure, FIG.3 is a cross-sectional view taken along A-A of FIG.2, and FIG.4 is a cross-sectional view taken along B-B of FIG.2.

A stator core (100) includes, as a subject matter of the present disclosure, a continuous coupling of a plurality of first split core modules (110) in a cylindrical shape, as shown in FIG.1, and a plurality of second split core modules interposed between the first split core modules (110) as shown in FIG.2.

Referring to FIG.3, the first split core module (110) is provided in a "T" shape for a cross-section perpendicular to a central axis of the stator core, and includes a first yoke (111) and a first tooth (112). The first yoke (111) is provided on a cylindrical periphery of the stator core (100), forms an arc by an inner circumferential surface and an outer circumferential surface relative to a center of the stator core. Both distal ends of the first yoke (111) are provided in a complementary shape whereby adjacent first split core modules are coupled in a complementary manner, whereby the cylindrical stator core (100) is formed.

The first tooth (112) is protrusively formed from the inner circumferential surface toward the center and wound by a coil, where the shape of the first tooth (112) has no difference from prior art, such that no further detailed explanation thereto will be omitted. However, the first tooth (112) is preferably formed with a slit (S) having a first gap (t1) from an adjacent first tooth (112). The first gap (t1) may be appropriately changed in accordance with size and specification of the stator core (100). However, the size of the first tooth (112) is preferably formed with a smaller value.

Referring to FIG.2, the first split core module (110) has a first height (h1) by stacking a plurality of split core plates (101) toward a central axis of the stator core (100). However, the first split core module is not limited thereto, and may be formed by injection-molding or sintering one body to have the first height (h1).

Referring to FIG.2 again, a second split core module (120) is preferably provided in one sheet of split core plate arranged between first split core plates (101) forming the first split core modules (110) at a predetermined space. Furthermore, referring to FIG.4, the shape of the second split core module (120) is formed substantially same as that of the first split core module (110), and the second split core module (120) includes a second yoke (121) and a second tooth (122).

The second yoke (121) is provided in the same size and shape as those of the first yoke (111), and the second tooth (122) has a substantially same shape as that of the first tooth (112), but a second gap (t2) between adjacent second teeth (122) is preferably formed less than 0.1mm by forming a wider width of a surface opposite to a rotor (not shown).

Furthermore, the second split core module (120) is preferably formed with one sheet of second split core plate, where, as shown in FIG.2, the second split core module (120) is preferably interposed between the first split core modules (110) formed by stacking a total of 14 sheets of first split core plates (101).

At this time, as illustrated in FIG.2, wherein the first height (h1) is preferably higher than the second height (h2), which is the height of the second split core module (120). Particularly, in a case a total height of the stator core (100) is given as 100, a ratio between the first height (h1) of the first split core module (110) and the second height (h2) of the second split core module (120) is preferably 95:5.

According to an exemplary embodiment of the present disclosure, a height of the first split core plate (101) and that of the second split core plate is preferably same.

Furthermore, according to an exemplary embodiment of the present disclosure, the first height (h1) preferably corresponds to a height of at least one or more rotor core modules forming a rotor core (not shown) rotatably arranged inside the stator core (100).

For example, in case of a rotor core generally used for an EPS motor, three rotor core modules are press-fitted in a twisted manner each at a predetermined angle to form a skew, where the height of the rotor core module may correspond to the first height (h1) of the first split core module (110).

At this time, the second split core module is arranged at a position corresponding to a border of the plurality of rotor core modules forming a skew formed by the plurality of rotor core modules twisted at a predetermined angle.

According to the present disclosure thus configured, the second split core module (120) is inserted at a predetermined section to provide a second tooth section (122) formed by narrowing an opened area of a slit (S) formed between the first teeth (112), whereby a cogging torque of the stator rotor can be minimized.

It should be apparent that as the first gap (t1) between the first teeth (112) is narrowed, the cogging can be reduced. However, in this case, there may be generated a cause of another problem that increases torque ripples.

As apparent from the foregoing, the stator core according to the present disclosure has an industrial applicability in that a shape of the stator core can be improved to minimize a cogging torque of an EPS motor, whereby a steering feel for a driver can be enhanced.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

## Claims

1. A stator core, comprising:
a first split core module provided in a "T" shape for a cross-section perpendicular to a central axis of the stator core, forming an arc by an inner circumferential surface and an outer circumferential surface forming a first yoke relative to a center of the stator core, having a first tooth protrusively formed from the inner circumferential surface toward the center and wound by a coil, and having a first height (h1); and
a second split core module interposed between the split core modules stacked toward a central axis of the stator core, provided in a "T" shape for a cross-section perpendicular to a central axis of the stator core, forming an arc by an inner circumferential surface and an outer circumferential surface forming a second yoke relative to a center of the stator core, having a second tooth protrusively formed from the inner circumferential surface toward the center and wound by a coil, and having a second height (h2),
wherein the first height (h1) is higher than the second height (h2), a space between the teeth is formed with a first gap (t1) when a cylindrical shape is formed by coupling of a plurality of first split core modules, and a space between the teeth is formed with a second gap (t2) when a cylindrical shape is formed by coupling of a plurality of second split core modules.

2. The stator core of claim 1, wherein the first split core module is formed by stacking a plurality of first split core plates.

3. The stator core of claim 2, wherein the first split core module is formed by stacking a total of 14 sheets of first split core plates.

4. The stator core of claim 2, wherein the second split core module is formed by one sheet of second split core plate.

5. The stator core of claim 4, wherein each height of the first and second split core plates is identical.

6. The stator core of claim 1, wherein the second gap (t2) is less than 0.1mm.

7. The stator core of claim 1, wherein the second gap (t2) becomes zero to allow the second teeth to contact each other.

8. The stator core of claim 1, wherein each of the first and second teeth has a same thickness at a coil winding portion.

9. The stator core of claim 1, wherein the first height (h1) corresponds to a height of at least one or more rotor core modules forming a rotor core rotatably mounted at an inner surface of the stator core.

10. The stator core of claim 9, wherein the second split core module is arranged at a position corresponding to a border of the plurality of rotor core modules forming a skew formed by the plurality of rotor core modules twisted at a predetermined angle.
